# EUROPÄISCHE PATENTSCHRIFT

(11) **EP 0 625 690 B1**
(45) Veröffentlichungstag und Bekanntmachung des Hinweises auf die Patenterteilung: **03.04.1996**
(21) Anmeldenummer: 93108246.5
(22) Anmeldetag: 21.05.1993
(51) Int. Cl.: G01B 9/02, G01D 5/38

(54) **Lichtelektrische Positionsmesseinrichtung**
Optoelectric position measuring device
Dispositif de mesure de position optoélectrique

(43) Veröffentlichungstag der Anmeldung: 23.11.1994
(73) Patentinhaber: Dr. Johannes Heidenhain GmbH, D-83292 Traunreut (DE)
(72) Erfinder: Spanner, Erwin, Dipl.-Phys., W-8220 Traunstein (DE)

(56) Entgegenhaltungen:
- EP-A- 0 276 395
- EP-A- 0 434 855
- EP-A- 0 509 716
- EP-A- 0 509 979
- DE-C- 3 705 653

## Beschreibung

Die Erfindung bezieht sich auf eine lichtelektrische Positionsmeßeinrichtung zur Messung der relativen Lage zweier Objekte zueinander.

Positionsmeßeinrichtungen sind als Interferometer in integriert optischer Bauart bekannt. Als Beispiel sei die DE-C2 36 30 887 genannt. Dort wird eine Anordnung auf einem Substrat beschrieben, bei der ein Wellenleiter für den Meßstrahl mit einem Laser verbunden ist. Am anderen Ende des Wellenleiters befindet sich ein Aus- bzw. Einkoppelgitter für den Meßstrahl. Mittels eines Kopplers wird aus dem Meßwellenleiter ein sogenannter Bezugswellenleiter gewonnen, der an einer verspiegelten Kante des Substrates endet, die somit einen Spiegel für den Bezugswellenleiter bildet. Derartige Spiegel oder auch Bragg-Reflektoren sind in der integrierten Optik nicht leicht herzustellen. Auch Systeme, die Linsen benötigen, sind in der Herstellung und Justierung nicht unproblematisch.

Aus der EP-A-0 434 855 ist ein integriert optisch aufgebautes Interferometer bekannt, bei dem die Aufspaltung des Lichtes in Teilstrahlenbündel und deren Interferenz mit Hilfe von Lineargittern in einem planaren Lichtwellenleiter erfolgt. Von einer derartigen Positionsmeßeinrichtung geht die Erfindung aus.

Der vorliegenden Erfindung liegt die Aufgabe zugrunde, eine gattungsgemäße Positionsmeßeinrichtung zu schaffen, die beispielsweise Reflektoren und Linsen nur in geringstem Umfang benötigt, die besonders einfach aufgebaut ist, wenig Justageaufwand erfordert, leicht den Erfordernissen angepaßt werden kann und zudem störsicher arbeitet.

Diese Aufgabe wird von einer Positionsmeßeinrichtung mit den Merkmalen des Anspruches 1 gelöst.

Die Vorteile der erfindungsgemäßen Positionsmeßeinrichtung liegen darin, daß sich die passiven Elemente auf einem Substrat zu einer interferometrischen Positionsmeßeinrichtung in integriert optischer Bauweise auf kleinstem Raum zusammenfassen lassen und daß jegliche Art von Reflektor und/oder Linse auf dem Chip entfallen kann.

Lediglich der Meßreflektor bzw. das Maßstabgitter an dem zu messenden Objekt ist zwangsläufig noch außerhalb des Substrates angeordnet.

Weitere Vorteile sind durch die Unteransprüche ausgedrückt.

Anhand der Zeichnungen soll mit Hilfe von Ausführungsbeispielen die Erfindung noch näher erläutert werden.

Es zeigt
- Figur 1: ein Interferometer mit Koppelgittern und einem Meßreflektor;
- Figur 2: eine Variante von Figur 1 und
- Figur 3: ein integriert-optisches Gitterinterferometer.

Wie bei Darstellungen in der integrierten Optik üblich, müssen die Ausführungsbeispiele stark schematisiert und oft auch verzerrt dargestellt sein, damit die wesentlichen Einzelheiten deutlich werden.

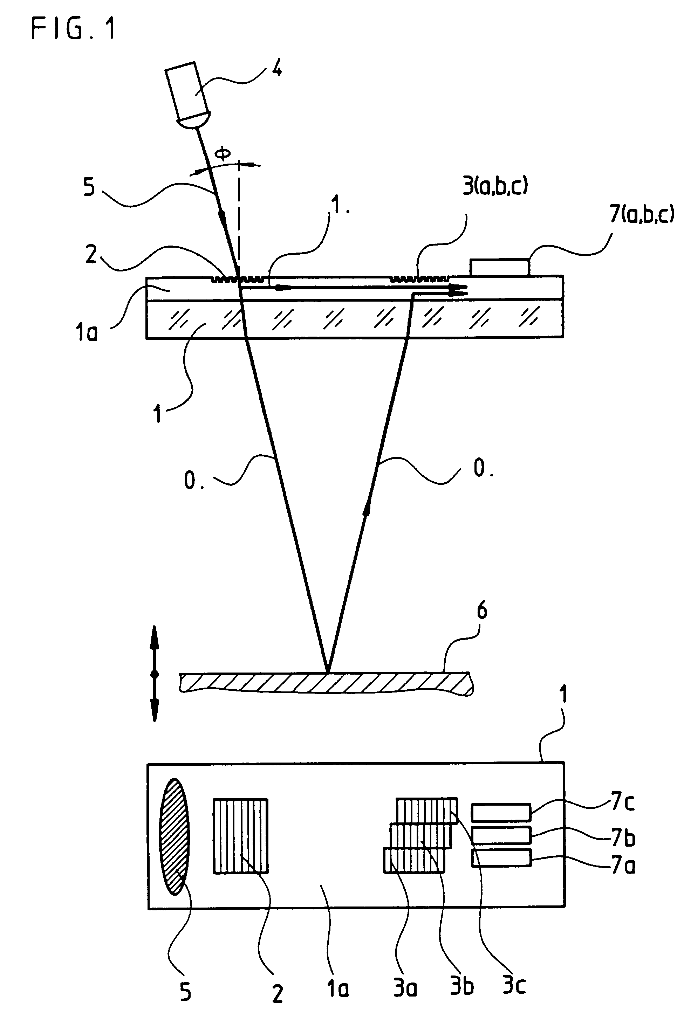

In Figur 1 ist ein Substrat 1 gezeigt, in oder auf dessen Oberfläche sich ein planarer Lichtwellenleiter la erstreckt.

Dort sind zwei Koppelgitter 2 und 3 vorgesehen. Ein von einer Laserdiode 4 in das Substrat 1 einfallendes Strahlenbündel 5 trifft auf ein Einkoppelgitter 2, welches auch als Strahlteiler wirkt. Das unter einem Winkel Φ einfallende Strahlenbündel 5 wird derart aufgespalten, daß das Teilstrahlenbündel 0. Ordnung auf einen Meßreflektor trifft, der hier als Planspiegel 6 ausgebildet ist. Das Teilstrahlenbündel mit dem Anteil der 1. Ordnung wird abgebeugt, in den planaren Lichtwellenleiter la eingekoppelt, liegt dort in Form einer geführten Mode vor und wird zu einem Interferenzkoppelgitter 3 geleitet.

Dem Interferenzkoppelgitter 3 sind Detektoren 7a, 7b, 7c nachgeschaltet.

Das Teilstrahlenbündel mit dem Anteil der 1. Ordnung, welches im Einkoppelgitter 2 abgebeugt wird, wird dem Interferenzkoppelgitter 3 und den Detektoren 7a bis 7c zugeführt und bildet den Referenzarm des Interferometers.

Das Teilstrahlenbündel mit dem Anteil der 0. Ordnung, welches über den Meßreflektor 6 geführt wird, trifft auf das Interferenzkoppelgitter 3, von dem es auf die Detektoren 7a bis 7c gelenkt wird. Dieser Zweig 0. bildet den Meßarm des Interferometers.

Unter dem Interferenzkoppelgitter 3 interferieren die Teilstrahlenbündel von Meßarm 0. und Referenzarm 1., so daß mit Hilfe dieses dreiteiligen Interferenzkoppelgitters 3a, 3b, 3c in den Detektoren 7a, 7b, 7c drei zueinander phasenverschobene Signale erzeugt werden. Wie in der Draufsicht auf das Substrat zu erkennen ist, sind die drei Teilbereiche 3a, 3b, 3c des Interferenzkoppelgitters 3 in Meßrichtung zueinander phasenverschoben, so daß z.B. drei um 120° zueinander phasenverschobene Signale von den Detektoren 7a, 7b, 7c detektiert werden.

Die detektierten Signale entstehen durch die Modulation der interferierten Teilstrahlenbündel bei Abstandsänderungen des Planspiegels 6 vom Substrat 1. Wenn der Planspiegel 6 parallel zum Substrat 1 angeordnet wird, können die Gitterkonstanten vom Einkoppelgitter 2 und vom Interferenzkoppelgitter 3 gleich groß gewählt werden.

Damit der unter dem Winkel Φ eingekoppelte Referenzstrahl 1. nicht vollständig am Interferenzkoppelgitter 3 ausgekoppelt wird, sollte dessen Koppellänge größer sein, als der Durchmesser des Strahlenbündels 5 in Koppelrichtung.

Da sich der Auftreffpunkt des Meßstrahles 0. am Interferenzkoppelgitter 3 mit der Abstandsänderung des Planspiegels 6 vom Substrat 1 verschiebt, ist der Arbeitsbereich des Interferometers entsprechend eingeschränkt.

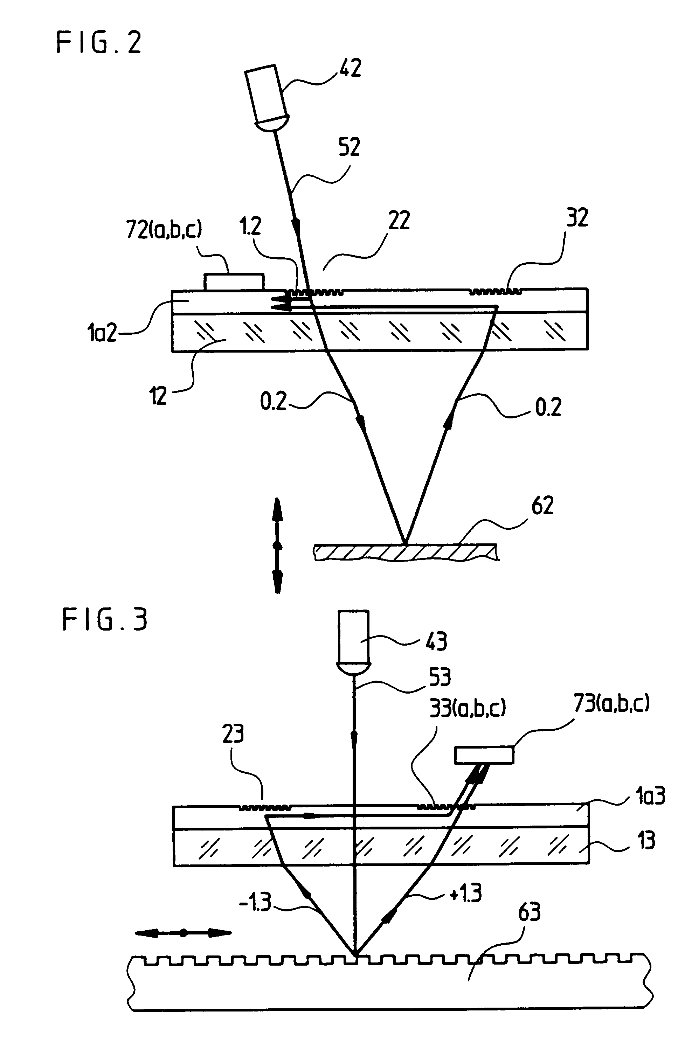

Bei entsprechender Auslegung des Koppelgitters 22 und bei darauf abgestimmtem spitzen Einfallswinkel Φ des Strahlenbündels 52 findet die Aufspaltung in Teilstrahlenbündel und Interferenz der Teilstrahlenbündel im selben Koppelgitter 22 statt. Zur Realisierung ist ein Koppelgitter 32 zum Umlenken des Teilstrahlenbündels erforderlich, welches in Teilgitter aufgeteilt sein kann. In Figur 2 ist schematisch ein Strahlengang für dieses Ausführungsbeispiel gezeigt, welches im Übrigen der Anordnung gemäß Figur 1 entspricht, was auch durch die gleichen Bezugszeichen mit nachgestelltem Figurenindex deutlich wird.

In Figur 3 wird in Analogie zu Figur 1 eine interferometrische Positionsmeßeinrichtung dargestellt, bei der anstelle eines Planspiegels ein Gittermaßstab 63 zur Messung von Relativverschiebungen zwischen dem Substrat 13 und dem Gittermaßstab 63 vorgesehen ist.

Ein von einer Laserdiode 43 emittiertes Strahlenbündel 53 durchtritt einen auf einem Substrat 13 aufgebrachten Wellenleiter 1a3 und trifft auf den Gittermaßstab 63. Am Gitter dieses Gittermaßstabes 63 werden durch Beugung zwei Teilstrahlenbündel +1.3 und -1.3 erzeugt und auf das Substrat 13 reflektiert. Auf dem Substrat 13 bzw. in dem Wellenleiter 1a3 befinden sich zwei Koppelgitter 23 und 33, wobei das Koppelgitter 33 - ähnlich gemäß Figur 1 - aus drei Teilgittern 33a, 33b, 33c besteht.

Mit Hilfe des Koppelgitters 23 wird das Teilstrahlenbündel -1.3 umgelenkt, in den Wellenleiter 1a3 eingekoppelt und zum Koppelgitter 33 geleitet. Das Teilstrahlenbündel +1.3 wird vom Koppelgitter 33 bzw. dessen Teilgittern 33a, 33b, 33c umgelenkt und ebenfalls in den Wellenleiter 1a3 eingekoppelt. Hier interferieren die Teilstrahlenbündel +1.3 und -1.3, wobei die drei Teilbereiche des Teilstrahlenbündels +1.3 eine relative Phasenverschiebung erfahren, so daß von Detektoren 73a, 73b und 73c drei phasenverschobene elektrische Signale erzeugt werden können.

Die Detektoren können sowohl neben als auch auf den Koppelgittern angeordnet sein. Ebenso ist die Anordnung an den Stirnseiten des Substrates möglich.

Es versteht sich, daß die Aufteilung der entsprechenden Koppelgitter nicht auf drei Teilgitter beschränkt ist. Es können auch lediglich zwei Teilgitter oder aber auch vier oder noch mehr gebildet werden, wenn eine entsprechende Anzahl von phasenverschobenen Signalen generiert werden soll, wobei es dem Fachmann überlassen bleibt, welches oder welche der Koppelgitter in phasenverschobene Teilgitter aufgeteilt werden.

Ebenso können Durchlichtanordnungen nach der Erfindung realisiert werden.

## Patentansprüche

1. Lichtelektrische Positionsmeßeinrichtung zur Messung der relativen Lage zweier Objekte zueinander, bestehend aus einer kohärentes Licht aussendenden Lichtquelle (4; 42; 43), wenigstens einem Gitter (2; 22; 63) zum Erzeugen von mindestens zwei gebeugten Teilstrahlenbündeln (0., 1.; 0.2, 1.2; +1.3, -1.3) und mindestens einem planaren Wellenleiter (1a; 1a2; 1a3), wobei der Wellenleiter (1a; 1a2; 1a3) in mindestens einer Ebene wenigstens zwei räumlich getrennte Gitter (2, 3; 22, 32; 23, 33) aufweist, die als Koppelgitter derart ausgebildet sind, daß von einem der Koppelgitter (2; 32; 23) zumindest eines der Teilstrahlenbündel (1.; 0.2; -1.3) in den Wellenleiter (1a; 1a2; 1a3) eingekoppelt und einem weiteren Koppelgitter (3; 22; 33) zugeführt wird, und daß vom weiteren Koppelgitter (3; 22; 33) zusätzlich ein weiteres der Teilstrahlenbündel (0.; 1.2; +1.3) in den Wellenleiter (1a; 1a2; 1a3) eingekoppelt und mit dem ersten Teilstrahlenbündel (1.; 0.2; -1.3) zur Interferenz gebracht wird, dadurch gekennzeichnet, daß wenigstens eines der Koppelgitter (3; 33) aus mehreren Teilgittern (3a, 3b, 3c; 33a, 33b, 33c) besteht, deren Gitterstrukturen in der Gitterebene in Koppelrichtung zueinander versetzt sind, so daß die interferierenden Teilstrahlenbündel (0., 1.; 0.2, 1.2; +1.3, -1.3) eine relative Phasenverschiebung erfahren und von den Teilgittern (3a, 3b, 3c; 33a, 33b, 33c) zugeordneten Detektoren (7a, 7b, 7c; 72a, 72b, 72c; 73a, 73b, 73c) in phasenverschobene elektrische Signale umgewandelt werden.

2. Positionsmeßeinrichtung nach Anspruch 1, dadurch gekennzeichnet, daß die Gitterkonstanten der Gitter (2, 3; 22, 32) identisch sind.

3. Positionsmeßeinrichtung nach Anspruch 1, dadurch gekennzeichnet, daß Gitterkonstanten der Gitter (23 und 33) unterschiedlich sind.

4. Positionsmeßeinrichtung nach Anspruch 1, dadurch gekennzeichnet, daß zur Modulation der interferierenden Teilstrahlenbündel ein Planspiegel (6; 62) vorgesehen ist, dessen Abstand vom Substrat (1, 12) veränderlich ist.

5. Positionsmeßeinrichtung nach Anspruch 1, dadurch gekennzeichnet, daß zur Modulation der interferierenden Teilstrahlenbündel ein Gitter (63) vorgesehen ist, das in einer Ebene parallel zum Substrat (13) beweglich ist.

6. Positionsmeßeinrichtung nach Anspruch 5, dadurch gekennzeichnet, daß das Gitter (63) ein Reflexionsgitter ist.

7. Positionsmeßeinrichtung nach Anspruch 1, dadurch gekennzeichnet, daß als Lichtquelle eine Laserdiode (4, 42, 43) dient.

8. Positionsmeßeinrichtung nach Anspruch 1, dadurch gekennzeichnet, daß die Detektoren (7, 72, 73) neben, oder auf den Koppelgittern (3, 22, 33) oder an den Stirnseiten des Substrates angeordnet sind.

## Claims

1. Optoelectric position measuring device for measurement of the relative position of two objects, comprising a light source (4; 42; 43) emitting coherent light, at least one grating (2; 22; 63) for generation of at least two diffracted component beam bundles (0., 1.; 0.2. 1.2; +1.3, -1.3) and at least one planar waveguide (1a; 1a2; 1a3), wherein in at least one plane the waveguide (1a; 1a2; 1a3) has at least two spatially separate gratings (2, 3; 22, 32; 23, 33), which are constructed as coupling gratings (2; 32; 23) in such a way that at least one of the component beam bundles (1.; 0.2; -1.3) is coupled into the waveguide by one of the coupling gratings (2; 32; 23) and is passed to a further coupling grating (3; 22; 33), and that a further bundle of the component beam bundles (0.; 1.2; +1.3) is additionally coupled into the waveguide (la; la2; la3) by the further coupling grating (3; 22; 33) and is brought to interference with the first component beam bundle (1.; 0.2; -1.3), characterised in that at least one of the coupling gratings (3; 33) consists of several sub-gratings (3a, 3b, 3c; 33a, 33b, 33c), the grating structures of which are offset relative to one another in the grating plane in coupling direction so that the interfering component beam bundles (0., 1.; 0.2, 1.2; +1.3, -1.3) undergo a relative phase shift and are converted by detectors (7a, 7b, 7c; 72a, 72b, 72c; 73a, 73b, 73c) allocated to the sub-gratings (3a, 3b, 3c; 33a, 33b, 33c) into phase-shifted electrical signals.

2. Position measuring device according to Claim 1, characterised in that the grating constants of the gratings (2, 3; 22, 32) are identical.

3. Position measuring device according to Claim 1, characterised in that grating constants of the gratings (23 and 33) are different.

4. Position measuring device according to Claim 1, characterised in that for modulation of the interfering component beam bundles, a plane mirror (6; 62) is provided, the distance of which from the substrate (1, 12) is variable.

5. Position measuring device according to Claim 1, characterised in that for modulation of the interfering component beam bundles, a grating (63) is provided which is movable in a plane parallel to the substrate (13).

6. Position measuring device according to Claim 5, characterised in that the grating (63) is a reflection grating.

7. Position measuring device according to Claim 1, characterised in that a laser diode (4, 42, 43) acts as light source.

8. Position measuring device according to Claim 1, characterised in that the detectors (7, 72, 73) are arranged adjacent to or on the coupling gratings (3, 22, 33) or on the face sides of the substrate.

## Revendications

1. Dispositif optoélectrique de mesure de position pour la mesure de la position relative de deux objets l'un par rapport à l'autre, comprenant une source (4; 42; 43) de lumière qui émet de la lumière cohérente, au moins un réseau (2; 22; 63) pour produire au moins deux faisceaux de rayons partiels (0., 1.; 0.2, 1.2; +1.3, -1.3) diffractés et au moins un guide d'ondes (1a; 1a2; 1a3) planaire, le guide d'onde (1a; 1a2; 1a3) présentant, dans au moins un plan, au moins deux réseaux (2,3;22,32;23, 33) séparés dans l'espace qui sont agencés sous forme de réseau de couplage de manière telle qu'au moins l'un (1.; 0.2; -1.3) des faisceaux de rayons partiels soit couplé par un réseau de couplage (2; 32; 23) dans le guide d'onde (1a;1a2;1a3) et amené à un réseau de couplage (2; 22; 33) supplémentaire et qu'un autre faisceau de rayons partiel (0.; 1.2; +1.3) soit couplé par le réseau de couplage (3;22;33) supplémentaire dans le guide d'onde (1a;1a2;1a3) et amené en interférence avec le premier faisceau de rayons partiel (1.; 0.2; -1.3), caractérisé par le fait que l'un au moins des réseaux de couplage (3; 33) est formé de plusieurs réseaux partiels (3 a, 3b, 3c; 33a, 33b, 33c) dont les structures, dans le plan du réseau, sont décalées les unes par rapport aux autres dans la direction de couplage de manière telle, que les faisceaux de rayons partiels (0.,1.;0.2,1.2;+1.3,-1.3) amenés en interférence subissent un déphasage relatif et soient transformés en signaux électriques déphasés par des capteurs (7a, 7b, 7c; 72a, 72b, 72c; 73a, 73b, 73c) associés aux réseaux partiels (3a, 3b, 3c; 33a, 33b 33c).

2. Dispositif de mesure de position selon la revendication 1, caractérisé par le fait que les constantes des réseaux (2, 3; 22, 32) sont identiques.

3. Dispositif de mesure de position selon la revendication 1, caractérisé par le fait que les constantes des réseaux (23 et 33) sont différentes.

4. Dispositif de mesure de position selon la revendication 1, caractérisé par le fait qu'il est prévu, pour moduler les faisceaux de rayons partiels amenés en interférence, un miroir plan (6; 62) dont la distance par rapport au substrat (1, 12) peut varier.

5. Dispositif de mesure de position selon la revendication 1, caractérisé par le fait qu'il est prévu, pour moduler les faisceaux de rayons partiels amenés en interférence, un réseau (63) qui est mobile dans un plan parallèle au substrat (13).

6. Dispositif de mesure de position selon la revendication 5, caractérisé par le fait que le réseau (63) est réseau de réflexion

7. Dispositif de mesure de position selon la revendication 1, caractérisé par le fait que l'on utilise comme source de lumière une diode laser (4, 42, 43).

8. Dispositif de mesure de position selon la revendication 1, caractérisé par le fait que les capteurs (7, 72, 73) sont disposés à côté ou sur les réseaux de couplage (3, 22 33)ou sur les faces frontales du substrat.
